# EUROPEAN PATENT SPECIFICATION

(11) **EP 3 000 626 B1**
(45) Date of publication and mention of the grant of the patent: **05.07.2017**
(21) Application number: 14801606.6
(22) Date of filing: 19.05.2014
(51) Int. Cl.: B60C 15/024, B60C 15/06, B60C 17/00

(54) **RUN FLAT TIRE**
REIFEN MIT NOTLAUFRING
PNEUMATIQUE À MOBILITÉ ÉTENDUE

(30) Priority: 20.05.2013 JP 2013106448
(43) Date of publication of application: 30.03.2016
(73) Proprietor: Bridgestone Corporation, Tokyo 104-8340 (JP)
(72) Inventor: MOTOORI, Osamu, Kodaira-shi Tokyo 187-8531 (JP)
(74) Representative: Oxley, Robin John George
(86) International application number: PCT/JP2014/002627
(87) International publication number: WO 2014/188699

(56) References cited:
- FR-A1- 2 809 348
- JP-A- H 061 123
- JP-A- H0 920 110
- JP-A- 2002 513 361
- JP-A- 2002 513 361
- JP-A- 2007 039 015
- JP-A- 2009 126 262
- JP-A- 2010 111 173
- JP-A- 2010 111 173
- US-A- 4 554 960

## Description

### TECHNICAL FIELD

The present invention relates to a run flat tire.

### BACKGROUND ART

There have been proposed, as what is called "run flat tires" each capable of running a certain distance without losing load-carrying capacity thereof when the tire internal pressure has decreased due to puncture or the like, side-reinforcing type run flat tires of various types in which rigidity of each sidewall portion is enhanced by provision of a side-reinforcing rubber having a crescent-shaped cross section and relatively high elasticity on the inner peripheral side of a carcass of the sidewall portion of the tire.

Each of such side-reinforcing type run flat tires having side-reinforcing rubbers as described above can run, with the help of the side-reinforcing rubber, without experiencing large flexural deformation when the tire goes straight in run flat running (i.e. running in a state where the internal pressure of the tire has significantly decreased due to puncture or the like). However, when the run flat tire makes a turn, the tire experiences significant deformation in the tire width direction in particular because lateral force is exerted thereon by the turn. Deformation of the run flat tire by lateral force then pulls a bead portion, as well as the corresponding sidewall portion, of the tire toward the turning center side, whereby the bead portion may climb over a rim hump to possibly drop onto a well bed of a rim or the bead portion may possibly climb over a rim flange. As a result, the bead portion tends to come off from a rim seat of the rim in the run flat tire.

In view of the aforementioned problem that a bead portion tends to come off from a rim in the conventional side-reinforcing type run flat tire, there have been proposed: use of a rim having a specific shape which prevents a bead portion of a tire from climbing over a rim hump when lateral force is exerted on the tire; a tire capable of well preventing a bead portion from coming off from a rim seat when lateral force is exerted thereon by, for example, embedding a bead core at a specific position in the bead portion (e.g. PTL 1); and the like.

### CITATION LIST

### Patent Literature

PTL 1: JP-A 2009-126262.

Attention is further drawn to the disclosure of document FR 2809348.

### SUMMARY

The rim having a specific shape as described above, however, necessitates a user to newly buy the particular rim, together with a run flat tire, when the user who wants to use the run flat tire does not have that particular rim, thereby placing a financial burden on the user. Further, the rim of this type has another demerit in terms of efficiently utilizing resources because the rim renders a standard rim which has been used by the user redundant.

Regarding the run flat tire as disclosed in PTL 1, yet higher resistance to coming off from a rim is requested, although the run flat tire can somehow prevent a bead portion from coming off from a rim seat. In this connection, it is known that too high resistance to coming off of a bead portion from a rim in a run flat tire fixes the bead portion to the rim so firmly as to suppress even a slight movement of the bead portion in the rim in run flat running, thereby facilitating generation of strains in a side-reinforcing rubber provided on the outer side in the tire radial direction of the bead portion to possibly cause a problem of deterioration in durability of the side-reinforcing rubber.

In view of the aforementioned situation, an object of the present disclosure is to provide a run flat tire capable of ensuring satisfactorily high resistance to coming off of a bead portion from a rim in run flat running, while maintaining satisfactorily high durability of a side-reinforcing rubber.

Our run flat tire, wherein in a cross section in the tire width direction thereof:
provided that an intersection of a straight line tangent to an outer contour line of a bead heel of a bead portion at an end on the bead base surface side of the outer contour line and a straight line tangent to the outer contour line of the bead heel at an end on the bead back surface side of the outer contour line represents "bead heel point" in a case where the outer contour line of the bead heel of the bead portion is constituted of a curved line, and provided that an intersection of an outer contour line, on the bead base surface side, of the bead heel and an outer contour line, on the bead back surface side, of the bead heel represents "bead heel point" in a case where the outer contour line of the bead heel of the bead portion is constituted of straight lines (the bead heel point coincides with the sharp corner point of the bead heel in this case), diameter of a circle collectively formed by the bead heel point is smaller by 1.7-2.9 mm than rim diameter of a prescribed rim; and
provided that an intersection of an imaginary linear extension of a bead base surface from an end on the bead base surface side of an outer contour line of a bead toe of the bead portion and an imaginary linear extension of a bead inner surface from an end on the bead inner surface side of the outer contour line of the bead toe represents "bead toe point" in a case where the outer contour line of the bead toe of the bead portion is constituted of a curved line, and provided that an intersection of an outer contour line, on the bead base surface side, of the bead toe and an outer contour line, on the bead inner surface side, of the bead toe represents "bead toe point" in a case where the outer contour line of the bead toe of the bead portion is constituted of straight lines (the bead toe point coincides with the sharp corner point of the bead toe in this case), a line linking the bead heel point and the bead toe point is inclined by an angle of 12.2°-14.7° with respect to the tire width direction. According to this structure, it is possible to ensure satisfactorily high resistance to coming off of a bead portion from a rim in a run flat tire in run flat running, while maintaining satisfactorily high durability of a side-reinforcing rubber of the tire.

In our run flat tire, an angle, dimensions, and the like of a structural member of a tire is to be measured, unless otherwise specified, in a state where: the tire is not assembled with a prescribed rim with no load exerted thereon; the tire has a distance between respective bead portions matching a corresponding distance when the tire is assembled with the prescribed rim; and a bead back surface as the outer side surface in the tire width direction of a bead portion, which surface is to be brought into contact with a rim flange when the respective bead portions are assembled with the prescribed rim, is placed to be vertical with respect to the tire width direction. A "prescribed rim" represents a standard rim prescribed for each application tire size in "JATMA YEAR BOOK" as an industrial standard of "The Japan Automobile Tyre Manufacturers Association, Inc." of Japan.

Further, in our run flat tire, "the bead base surface" represents the inner peripheral surface in the tire radial direction of a bead portion, which surface is to be brought into contact with a bead seat of a prescribed rim when the respective bead portions are assembled with the prescribed rim and "the bead back surface" represents the outer side surface in the tire width direction of the bead portion, which surface is to be brought into contact with a rim flange of a prescribed rim when the respective bead portions are assembled with the prescribed rim.

In our run flat tire, a "bead toe" represents an innermost portion on the tire width direction of the bead portion and a "bead inner surface" represents a surface, facing the inner cavity of the tire, of the bead portion.

Yet further, in our run flat tire, "diameter of an annular end" and "diameter of a circle collectively formed by a point" each represent diameter of a circle collectively formed by linking the end/the point in the tire circumferential direction.

In our run flat tire, it is preferable that in a cross section in the tire width direction thereof: an outer contour line of a bead base corresponding to the bead base surface, of an outer contour line of the bead portion, includes a linear bead toe-side portion and a curved/linear bead heel-side portion linked with the bead toe-side portion at a linking point; a tangent of the bead heel-side portion differs from a tangent of the bead toe-side portion when the bead heel-side portion is linear; and the bead toe-side portion is inclined by an angle of 17.5°-19.5° with respect to the tire width direction. According to this structure, it is possible to effectively enhance resistance to coming off of a bead portion from a prescribed rim in a run flat tire in run flat running thereof, while preventing tire-rim assembling properties from being deteriorated when the tire is assembled with the prescribed rim.

Further, in our run flat tire, it is preferable in a cross section in the tire width direction thereof:
provided that a distance measured from the bead toe point to the linking point in the tire width direction is Lc and a distance measured from the bead toe point to the bead heel point in the tire width direction is Lw, Lc ≥ 0.5 × Lw. This structure also contributes to effectively enhancing resistance to coming off of a bead portion from a rim in the run flat tire in run flat running thereof.

Further, in our run flat tire, it is preferable in a cross section in the tire width direction thereof an angle formed at a bead toe point by linear outer contour lines/imaginary linear extensions of curved outer contour lines of the bead portion (which angle will occasionally be referred to as an "angle at the bead toe point" hereinafter) is ≥ 30°. This structure maintains satisfactorily high rigidity of a bead toe and thus successfully prevents the bead toe from being damaged when the tire is assembled with a prescribed rim. In this connection, "an angle formed at a bead toe point by linear outer contour lines/imaginary linear extensions of curved outer contour lines of the bead portion" represents in our run flat tire i) an angle formed by an imaginary linear extension of a bead base surface from an end on the bead base surface side of an outer contour line of a bead toe and an imaginary linear extension of a bead inner surface from an end on the bead inner surface side of the outer contour line of the bead toe in a case where the outer contour line of the bead toe is constituted of a curved line (the bead toe point is an intersection of the two linear extensions in this case) or ii) an angle formed by an outer contour line, on the bead base surface side, of the bead toe and an outer contour line, on the bead inner surface side, of the bead toe in a case where the outer contour line of the bead toe is constituted of straight lines (the bead toe point is an intersection of the two straight lines in this case).

In our run flat tire, it is preferable in a cross section in the tire width direction thereof diameter of an annular inner end in the tire radial direction of a bead core embedded in each bead portion is larger by 3.0-4.5 mm than the rim diameter of the prescribed rim. According to this structure, it is possible to effectively enhance resistance to coming off of a bead portion from a rim in the run flat tire in run flat running, while maintaining satisfactorily high durability of a side-reinforcing rubber of the tire.

Yet further, it is preferable in our run flat tire that a textile chafer is provided at least between a bead core embedded in each bead portion and the bead base surface of the bead portion. According to this structure, it is possible to further ensure satisfactorily high resistance to coming off of a bead portion from a rim in the tire.

According to our run flat tire, it is possible to provide a run flat tire capable of ensuring satisfactorily high resistance to coming off of a bead portion from a rim in run flat running, while maintaining satisfactorily high durability of a side-reinforcing rubber.

### BRIEF DESCRIPTION OF THE DRAWINGS

In the accompanying drawings, wherein:
FIG. 1 is a cross sectional view in the tire width direction, showing a run flat tire as one embodiment of our run flat tire;
FIG. 2 is a cross sectional view in the tire width direction, showing a vicinity of a bead portion of the run flat tire of FIG. 1 in an enlarged manner.

### DETAILED DESCRIPTION

An embodiment of our run flat tire will be demonstratively described in detail with reference to the drawings.

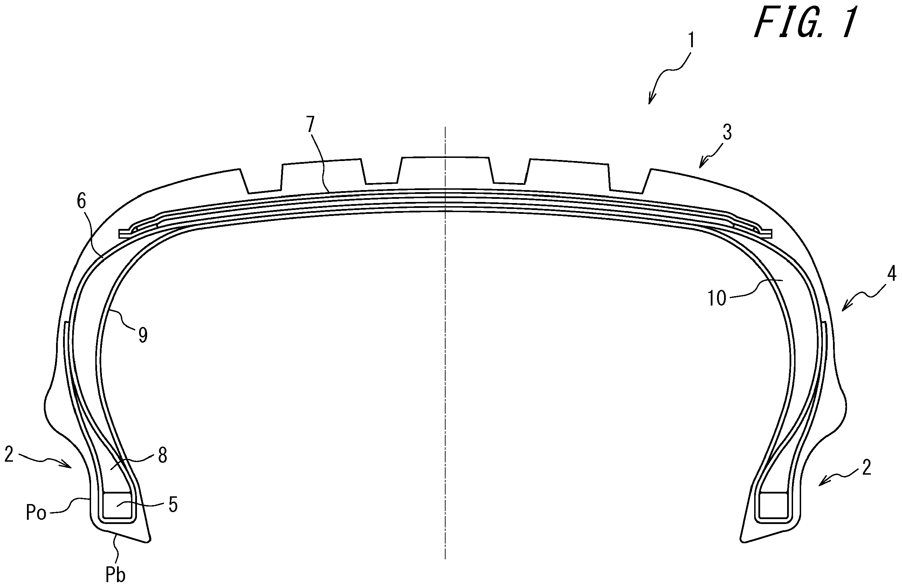

FIG. 1 is a cross sectional view in the tire width direction, showing a run flat tire 1 as one embodiment of our run flat tire (not assembled with a prescribed rim with no load exerted thereon in FIG. 1). The run flat tire 1 may occasionally be referred to simply as "the tire" hereinafter. The run flat tire 1 has a distance between respective bead portions 2 (described below in detail) matching a corresponding distance when the tire is assembled with a prescribed rim. A bead back surface Po as the outer side surface of each bead portion 2, which surface is to be brought into contact with a rim flange when the respective bead portions 2 are assembled with the prescribed rim, is placed to be vertical with respect to the tire width direction.

The run flat tire 1 shown in FIG. 1 is what is called a "run flat tire" capable of running a certain distance without losing load-carrying capacity thereof when the tire internal pressure has decreased due to puncture or the like. The run flat tire 1 has a tread portion 3, a pair of sidewall portions 4 continuous with respective sides of the tread portion 3, and the bead portions 2 continuous with the respective sidewall portions 4. The run flat tire 1 further has bead cores 5 each embedded in the corresponding bead portion 2, and a carcass 6 constituted of a carcass main body portion extending in a toroidal shape across the respective bead cores 5 along the tread portion 3, the sidewall portions 4 and the bead portions 2 and carcass turned-up portions positioned on the outer side in the tire width direction of the carcass main body, respectively, and each extending from the carcass main body to be turned up around the corresponding bead core 5 from the inner side toward the outer side in the tire radial direction.

A belt 7, constituted of three laminated belt layers as rubber-coated cord layers, is provided on the outer side in the tire radial direction of the carcass 6 in the tread portion 3. A tread rubber is provided on the outer side in the tire radial direction of the belt 7. Tread grooves such as a circumferential groove extending in the tire circumferential direction are formed at a surface of the tread rubber. The number of the belt layers and/or the positions thereof may be changed according to necessity in the run flat tire 1, i.e. our run flat tire, although FIG. 1 shows a case where the belt 7 is constituted of totally three belt layers.

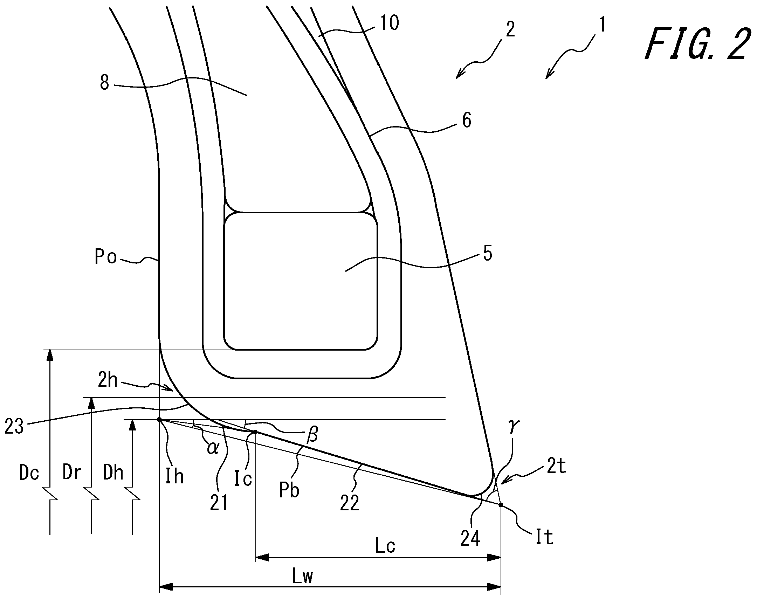

A bead filler 8 having a substantially triangular cross section is provided on the outer side in the tire radial direction of each bead core 5 embedded in the bead portion 2 so that the bead filler 8 extends between the carcass main body portion and the corresponding carcass turned-up portion positioned on the outer side in the tire width direction of the carcass main body portion, to gradually decrease thickness thereof along the carcass 6 toward the outer side in the tire radial direction, as shown in FIG. 1 and FIG. 2.

Further, a side-reinforcing rubber 10 having a substantially crescent-shaped cross section and made of rubber of relatively high elasticity is provided on the inner side in the tire width direction of the carcass 6 in each sidewall portion 4 (specifically, between the carcass 6 and an inner liner 9 provided on the inner surface side of the carcass 6 in a region ranging from an end in the tire width direction of the tread portion 3 to the corresponding bead portion 2). The side-reinforcing rubber 10 may alternatively be provided on the outer side in the tire width direction of the carcass 6 or between carcass layers in a case where the carcass 6 is formed by two carcass layers (not shown in the drawings).

The bead portion 2 has in the present embodiment a bead heel 2h and a bead toe 2t, of which outer contour lines are each constituted of a curved line in a cross section in the tire width direction of the tire, as shown in FIG. 2. The bead heel 2h of the bead portion 2 is positioned on the outer side in the tire radial direction of the bead toe 2t. The outer contour line of the bead heel 2h and/or the outer contour line of the bead toe 2t may be each formed by combination of straight lines.

Diameter Dh of a circle collectively formed by the bead heel point Ih is smaller by 1.7-2.9 mm than rim diameter Dr of a prescribed rim; and a line linking the bead heel point Ih and the bead toe point It is inclined, by an angle α which is in the range of 12.2°-14.7°, with respect to the tire width direction in a cross section in the tire width direction of the run flat tire 1, as shown in FIG. 2. The angle α represents an acute angle of the relevant angles.

Further, in the run flat tire 1, the diameter Dh of the bead heel point Ih is set to be smaller, by ≥ 1.7 mm, than the rim diameter Dr of the prescribed rim, as shown in FIG. 2, whereby the bead portion 2 is firmly fixed on the rim and a positional shift of the bead portion 2 can be well suppressed when lateral force is applied to the tire in run flat running thereof. In this connection, setting the diameter Dh of the bead heel point Ih to be too smaller than the rim diameter Dr of the prescribed rim may fix the bead portion on the rim too firmly and constrain the bead portion in the rim when lateral force is exerted on the tire in run flat running, so that an inner side portion in the tire radial direction of the side-reinforcing rubber, subjected to flexural deformation between a rim flange and a road surface, significantly bends to possibly cause concentration of strains on the side-reinforcing rubber. Such concentration of strains on the side-reinforcing rubber may eventually generate cracks in the side-reinforcing rubber and decrease durability thereof. In view of this, the diameter Dh is set to be smaller, by ≤ 2.9 mm, than the rim diameter Dr of the prescribed rim in the run flat tire 1, whereby the bead portion 2 is prevented from being fixed too firmly on the rim when lateral force is applied to the tire in run flat running thereof. As a result, it is possible to prevent strains from concentrating on the side-reinforcing rubber 10 and thus durability of the side-reinforcing rubber 10 from being deteriorated.

Further, it is possible in the run flat tire 1 to ensure satisfactorily high resistance to coming off of a bead portion from a rim in run flat running thereof when lateral force is applied to the tire, while preventing strains from concentrating on the side-reinforcing rubber 10, by setting the angle α to be within the aforementioned range, as shown in FIG. 2. Specifically, the angle α ≥ 12.2° increases contact pressure exerted on the rim by the portion on the bead toe 2t side of the bead portion 2 and thus successfully suppresses a positional shift of the bead portion 2 when lateral force is applied to the tire in run flat running thereof, thereby ensuring satisfactorily high resistance to coming off of the bead portion from the rim in the run flat tire. Further, the angle α ≤ 14.7° prevents the contact pressure exerted on the rim by the portion on the bead toe 2t side of the bead portion 2 from being too large and thus the bead portion 2 from being fixed too firmly on the rim, thereby effectively preventing strains from concentrating on the side-reinforcing rubber 10.

In terms of ensuring satisfactorily high resistance to coming off of a bead portion from a rim in the run flat tire, while well preventing strains from concentrating on the side-reinforcing rubber 10, it is preferable in a cross section in the tire width direction of the tire that: the diameter Dh is set to be smaller by 2.0-2.9 mm than the rim diameter Dr and the angle α is in the range of 12.5°-14.7° when the sectional height is ≥ 120 mm; and the diameter Dh is set to be smaller by 1.7-2.6 mm than the rim diameter Dr and the angle α is in the range of 12.2°-14.4° when the sectional height is < 120 mm. The "sectional height" represents a value obtained by multiplying "nominal cross sectional width" and "nominal aspect ratio" of a tire.

An operation for assembling a run flat tire with a rim generally includes: making each bead portion climb over a corresponding rim flange of the rim, to once position the bead portion on a well bed on the inner side than a corresponding rim hump; and then increasing tire internal pressure to a predetermined value so that the bead portion climbs over the rim hump to reach the predetermined position on a rim seat. Accordingly, a run flat tire having a side-reinforcing rubber of high elasticity provided in each sidewall portion tends to experience some difficulty in a tire-rim assembling operation when each bead portion climbs over a rim flange and/or a rim hump, as compared with a standard pneumatic tire. Preventing such difficulty in the tire-rim assembling operation from occurring is therefore requested in a run flat tire having a side-reinforcing rubber of high elasticity.

In view of this, it is preferable in a cross section in the tire width direction of the run flat tire 1 an outer contour line of a bead base corresponding to the bead base surface Pb, of an outer contour line of the bead portion 2, includes a linear bead toe-side portion 22 and a curved/linear bead heel-side portion 21 linked with the bead toe-side portion 22 at a linking point Ic, wherein the bead toe-side portion 22 is inclined, by an angle β in the range of 17.5°-19.5°, with respect to the tire width direction. In this connection, a tangent of the bead heel-side portion 21 differs from a tangent of the bead toe-side portion 22 when the bead heel-side portion 21 is linear. The bead heel-side portion 21 constitutes a portion of a curved portion 23 of the outer contour line of the bead heel 2h; the end of the curved portion 23 of the bead heel 2h coincides with the linking point Ic; and a bead base portion extending from the linking point Ic to a curved portion 24 of the bead toe 2t, to be inclined on the inner side in the tire radial direction, constitutes the bead toe-side portion 22 in the present embodiment, as shown in FIG. 2. The bead toe point It is preferably positioned on a liner extension of the bead toe-side portion 22. The angle β represents an acute angle of the relevant angles.

According to the aforementioned structure, the angle β ≥ 17.5° increases contact pressure exerted on the rim by the bead toe-side portion 22 of the bead portion 2 and thus effectively enhances resistance to coming off of the bead portion from the rim in the run flat tire when lateral force is applied to the tire in run flat running thereof. Further, the angle β ≤ 19.5° prevents the inclination angle of the bead toe-side portion 22 from being too large and increases rigidity of the bead toe 2t. Besides, the angle β ≤ 19.5° allows, for example, the bead toe 2t to smoothly climb over a rim flange without being hooked when the bead portion 2 climbs over the rim flange in the operation of assembling the tire 1 with the rim. That is, a damage such as tip chipping, of the bead toe 2t, can be prevented from occurring and thus good tire-rim assembling properties can be maintained. Yet further, the angle β ≤ 19.5° makes ground contact pressure exerted by the bead toe-side portion 22 on the rim even and increases the friction coefficient, thereby effectively enhancing resistance to coming off of the bead portion from the rim in the run flat tire when lateral force is applied to the tire in run flat running thereof. Setting the diameter Dh to be smaller by 1.7-2.9 mm than the rim diameter Dr of the prescribed rim and the angle α to be within the range of 12.2°-14.7° as described above also contributes to maintaining good tire-rim assembling properties in the run flat tire 1, i.e. our run flat tire.

In terms of improving the tire-rim assembling properties to prevent the bead portion from being damaged in the tire-rim assembling operation, while ensuring satisfactorily high resistance to coming off of a bead portion from a rim in the run flat tire, it is preferable in a cross section in the tire width direction of the tire that: the angle β is in the range of 18.0°-19.5° when the sectional height is ≥ 120 mm; and the angle β is in the range of 17.5°-19.0° when the sectional height is < 120 mm.

Although the bead heel-side portion 21 constitutes a portion of the curved portion 23 of the outer contour line of the bead heel 2h in the bead portion 2 shown in FIG. 2, the bead heel-side portion 21and the linking point Ic may be provided, separately from the curved portion 23 and the end thereof, on the bead base surface Pb on the inner side in the tire width direction than the curved portion 23. In such a case, a tangent of the bead heel-side portion 21 with respect to the tire width direction is preferably less than 17.5° when the bead heel-side portion 21 is linear.

Provided that a distance measured from the bead toe point It to the linking point Ic in the tire width direction is Lc and a distance measured from the bead toe point It to the bead heel point Ih in the tire width direction is Lw, Lc is preferably ≥ 0.5 × Lw in the run flat tire 1, i.e. our run flat tire,. This structure makes ground contact pressure exerted by the bead toe-side portion 22 on the rim even and increases the friction coefficient, thereby effectively enhancing resistance to coming off of the bead portion from the rim in the run flat tire when lateral force is applied to the tire in run flat running thereof.

The linking point Ic is preferably located, in a cross section in the tire width direction of the tire, within a widthwise region corresponding to the presence of the bead core 5 in the tire width direction (i.e. directly on the inner side in the tire radial direction of the bead core 5). Contact pressure exerted by the bead portion 2 on a rim changes between the bead heel 2h side and the bead toe 2t side at the linking point Ic as the changing point. It is possible to make the contact pressure less uneven by locating the linking point Ic directly on the inner side in the tire radial direction of the bead core 5 having relatively high rigidity.

An angle γ of the bead toe point It is preferably ≥ 30° in the present embodiment. Rigidity of the bead toe 2t then enhances, thereby well preventing damage such as tip chipping of the bead toe 2t from occurring when the tire 1 is assembled with a rim.

The angle γ of the bead toe point It is preferably in the range of 30° to 90° because the range is advantageous in the manufacturing process.

It is preferable that the outer contour line of the bead heel 2h of each bead portion 2 is constituted of a single arc and it is more preferable that a radius of curvature of the arc is in the range of 5.0-8.0 mm in a cross section in the tire width direction of the run flat tire 1, i.e. our run flat tire, although the outer contour line of the bead heel 2h may be constituted of either curved or straight lines. According to this structure in which the outer contour line of the bead heel 2h of the bead portion 2 is constituted of a single arc, a sharp corner is eliminated from the bead heel 2h, whereby the tire-rim assembling operation significantly improves. Further, rubber for the bead portion 2 can flow smoothly when a green tire is vulcanized because the outer contour line of the bead heel 2h is constituted of a single arc, whereby a defect rate in the manufacturing process can be decreased. In this connection, setting the radius of curvature of the arc to be within the aforementioned range further improves the tire-rim assembling properties.

It is preferable that diameter Dc of an annular inner end in the tire radial direction of the bead core 5 embedded in each bead portion 2 is larger by 3.0-4.5 mm than rim diameter Dr of a prescribed rim. According to this structure, it is possible to prevent in a satisfactory manner the bead portion 2 from being fixed too firmly on the rim when lateral force is applied to the tire in run flat running thereof and thus prevent strains from concentrating on the side-reinforcing rubber 10 and durability of the side-reinforcing rubber 10 from being deteriorated because the diameter Dc of the bead core 5 is set to be larger, by ≥ 3.0 mm, than the rim diameter Dr of the prescribed rim. Further, it is possible to prevent the bead core 5 from being distanced from the rim too much and thus ensure satisfactorily high contact pressure exerted by the bead portion 2 on the rim when lateral force is applied to the run flat tire in run flat running, to further effectively enhance resistance to coming off of a bead portion from a rim in the run flat tire, because the diameter Dc of the bead core 5 is set to be larger, by ≤ 4.5 mm, than the rim diameter Dr of the prescribed rim.

It is possible to further enhance resistance to coming off of the bead portion from a rim in the run flat tire in run flat running thereof when lateral force is applied to the tire, by increasing rigidity of the portion on the inner side in the tire radial direction than the bead core 5, of the bead core 2. Accordingly, a textile chafer (not shown in the drawing) is preferably provided at least between the bead core 5 and the bead base surface Pb in the run flat tire 1, i.e. our run flat tire. A reinforcing cord layer formed by coating a layer of aligned organic fiber cords with rubber can be used as the textile chafer. The cords of the textile chafer are to be inclined with respect to the tire circumferential direction by an angle in the range of 30° to 60° (the angle is preferably 45°).

An embodiment of our run flat tire has been demonstratively described with reference to the drawings in the foregoing descriptions. Our run flat tire, however, is not restricted to the aforementioned example and may be changed/modified in an appropriate manner within the scope of the appended claims.

### EXAMPLES

Our run flat tire will be described further in detail by the following Examples, which do not restrict our run flat tire by any means.

Test tires of Examples 1-21 are run flat tires each having a side-reinforcing rubber, tire size: 205/55R16, the characteristics shown in Table 1, and structures as shown in FIGS. 1 and 2. Test tires of Comparative Examples 1-4 are prepared in the same manner as Example 1 tire, except that the respective structures of bead portions of the formers differ from the latter in the relevant characteristic shown in Table 1. Performances of these test tires were evaluated by the following methods. The results are shown in Table 1.

### Tire-rim assembling test:

Tire-rim assembling properties were evaluated by visually observing: whether or not damage occurred in the bead toe when each test tire was assembled with a rim having rim size: 6.5J-16; and whether or not a bead portion was able to climb over a rim hump on the first try at the standard (tire internal) pressure applied in the tire-rim assembling operation (if the bead portion cannot climb over the rim hump on the first try, it will be necessary to depressurize the tire and subject the tire and the rim to recoating with lubricant). Tire-rim assembling properties are regarded as good when no damage occurred in the bead toe and the bead portion was able to climb over the rim hump at the standard (tire internal) pressure to allow the tire to be assembled with the rim on the first try.

### Run flat turning test:

Run flat turning test was carried out by: assembling each test tire with a rim as described above; setting internal pressure of the test tire to be 0 kPa; mounting the test tire on a vehicle having weight of 2t; subjecting the vehicle to a running-in operation by running the vehicle by 5 km at 20 km/hour; then running the vehicle at predetermined speed on a turn testing course having a radius of 25 m and stopping the vehicle when the vehicle completed 1/3 of the turn; making the vehicle go the second run on the turn testing course in the same manner as the first run; continuing the test, with increasing the speed of the vehicle by 1 km/hour, when the test tire had not come off from the rim and the side-reinforcing rubber of the tire had not broken (i.e. when the vehicle was able to run) after the second run; and recording the speed when either the bead portion came off from the rim or the side-reinforcing rubber broke (i.e. the turning limit speed). The higher turning limit speed represents the larger resistance to coming off of the bead portion from a rim and the better maintenance of satisfactory durability of the side-reinforcing rubber of the test tire.

**Table 1**

| | "Rim diameter Dr" - "Bead heal Dh" (mm) | Angleα (°) | Angle β (°) | Angle γ (°) | Proportion of distance Lc to distance Lw (%) | "Bead core Dc" - "Rim diameter Dr" (mm) | Tire-rim assembling test | | Run flat turning test | | |
|---|---|---|---|---|---|---|---|---|---|---|---|
| | | | | | | | Occurrence of damage in bead toe | Able to climb over rim hump? | Turning limit speed (km/hour) | Phenomenon which occurred at Turning limit speed | |
| | | | | | | | | | | Bead came off from rim? | Side-reinforcing rubber cracked? |
| Comp. Ex. 1 | 1.6 | 13.4 | 18.3 | 61.0 | 61.1 | 3.9 | No | Yes | 30 | Yes | No |
| Comp. Ex. 2 | 3 | 13.4 | 18.3 | 61.0 | 61.1 | 3.9 | No | Yes | 30 | No | Yes |
| Comp. Ex. 3 | 2.3 | 12.1 | 17.4 | 61.9 | 56.1 | 3.9 | No | Yes | 30 | Yes | No |
| Comp. Ex. 4 | 2.3 | 14.8 | 19.5 | 59.8 | 66.1 | 3.9 | No | Yes | 30 | No | Yes |
| Example 1 | 2.3 | 13.4 | 18.3 | 61.0 | 61.1 | 3.9 | No | Yes | 38 | Yes | No |
| Example 2 | 1.7 | 13.4 | 18.3 | 61.0 | 61.1 | 3.9 | No | Yes | 33 | Yes | No |
| Example 3 | 1.8 | 13.4 | 18.3 | 61.0 | 61.1 | 3.9 | No | Yes | 34 | Yes | No |
| Example 4 | 2.8 | 13.4 | 18.3 | 61.0 | 61.1 | 3.9 | No | Yes | 44 | Yes | No |
| Example 5 | 2.9 | 13.4 | 18.3 | 61.0 | 61.1 | 3.9 | No | Yes | 45 | Yes | No |
| Example 6 | 2.3 | 12.2 | 17.5 | 61.8 | 56.7 | 3.9 | No | Yes | 33 | Yes | No |
| Example 7 | 2.3 | 12.3 | 17.5 | 61.8 | 57.2 | 3.9 | No | Yes | 33 | Yes | No |
| Example 8 | 2.3 | 14.6 | 19.4 | 59.9 | 65.4 | 3.9 | No | Yes | 41 | Yes | No |
| Example 9 | 2.3 | 14.7 | 19.5 | 59.8 | 65.8 | 3.9 | No | Yes | 42 | Yes | No |
| Example 10 | 2.3 | 13.4 | 17.4 | 61.9 | 66.7 | 3.9 | No | Yes | 32 | Yes | No |
| Example 11 | 2.3 | 13.4 | 17.5 | 61.8 | 66.1 | 3.9 | No | Yes | 33 | Yes | No |
| Example 12 | 2.3 | 13.4 | 17.6 | 61.7 | 65.6 | 3.9 | No | Yes | 34 | Yes | No |
| Example 13 | 2.3 | 13.4 | 19.4 | 59.9 | 57 | 3.9 | No | Yes | 40 | Yes | No |
| Example 14 | 2.3 | 13.4 | 19.5 | 59.8 | 56.7 | 3.9 | No | Yes | 41 | Yes | No |
| Example 15 | 2.3 | 13.4 | 19.6 | 59.7 | 56.1 | 3.9 | Yes | Yes | - | - | - |
| Example 16 | 2.3 | 13.4 | 18.3 | 61.0 | 61.1 | 2.9 | No | Yes | 31 | No | Yes |
| Example 17 | 2.3 | 13.4 | 18.3 | 61.0 | 61.1 | 3 | No | Yes | 44 | Yes | No |
| Example 18 | 2.3 | 13.4 | 18.3 | 61.0 | 61.1 | 3.1 | No | Yes | 43 | Yes | No |
| Example 19 | 2.3 | 13.4 | 18.3 | 61.0 | 61.1 | 4.4 | No | Yes | 33 | Yes | No |
| Example 20 | 2.3 | 13.4 | 18.3 | 61.0 | 61.1 | 4.5 | No | Yes | 32 | Yes | No |
| Example 21 | 2.3 | 13.4 | 18.3 | 61.0 | 61.1 | 4.6 | No | Yes | 31 | Yes | No |

It is understood from Table 1 that the tires of Examples 1-21 each exhibit higher turning limit speed on a turn testing course in the run flat turning test, i.e. can ensure satisfactorily high resistance to coming off of a bead portion from a rim in run flat running, while maintaining satisfactorily high durability of a side-reinforcing rubber, as compared with the tires of Comparative Examples 1-4.
It should be noted that the run flat turning test was not carried out for the tire of Example 15 because damage occurred in the bead toe thereof in the tire-rim assembling test.

### INDUSTRIAL APPLICABILITY

According to our run flat tire, it is possible to provide a run flat tire capable of ensuring satisfactorily high resistance to coming off of a bead portion from a rim in run flat running, while maintaining satisfactorily high durability of a side-reinforcing rubber.

### REFERENCE SIGNS LIST

- 1: Run flat tire
- 2: Bead portion
- 21: Bead heel-side portion
- 22: Bead toe-side portion
- 23, 24: Curved portion
- 2h: Bead heel
- 2t: Bead toe
- 3: Tread portion
- 4: Sidewall portion
- 5: Bead core
- 6: Carcass
- 7: Best
- 8: Bead filler
- 9: Inner liner
- 10: Side-reinforcing rubber
- Dc, Dh: Diameter
- Dr: Rim diameter
- Ic: Linking point
- Ih: Bead heel point
- It: Bead toe point
- Lc, Lw: Distance
- Pb: Bead base surface
- Po: Bead back surface
- α,β,γ: Angle

## Claims

1. A run flat tire (1), having a tread portion (3), a pair of sidewall portions (4) continuous with respective sides of the tread portion, bead portions (2) continuous with the respective sidewall portions, and a side-reinforcing rubber (10) having a crescent-shaped cross section and provided in each sidewall portion, wherein in a cross section in the tire width direction thereof:
provided that an intersection of a straight line tangent to an outer contour line (23) of a bead heel (2h) of a bead portion (2) at an end (Ic) on the bead base surface side of the outer contour line and a straight line tangent to the outer contour line of the bead heel at an end on the bead back surface side of the outer contour line represents "bead heel point" (Ih) in a case where the outer contour line of the bead heel of the bead portion is constituted of a curved line, and provided that an intersection of an outer contour line (23), on the bead base surface side, of the bead heel (2h) and an outer contour line, on the bead back surface side, of the bead heel represents "bead heel point" (Ih) in a case where the outer contour line of the bead heel of the bead portion is constituted of straight lines (the bead heel point coincides with the sharp corner point of the bead heel in this case), diameter (Dh) of a circle collectively formed by the bead heel point is smaller by 1.7-2.9 mm than the rim diameter (Dr) of the prescribed rim; and
provided that an intersection of an imaginary linear extension of a bead base surface from an end on the bead base surface side of an outer contour line (24) of a bead toe (2t) of the bead portion (2) and an imaginary linear extension of a bead inner surface from an end on the bead inner surface side of the outer contour line of the bead toe represents "bead toe point" (It) in a case where the outer contour line of the bead toe of the bead portion is constituted of a curved line, and provided that an intersection of an outer contour line (24), on the bead base surface side, of the bead toe (2t) and an outer contour line, on the bead inner surface side, of the bead toe represents "bead toe point" (It) in a case where the outer contour line of the bead toe of the bead portion is constituted of straight lines (the bead toe point coincides with the sharp corner point of the bead toe in this case), the bead heel (2h) of the bead portion (2) is positioned on the outer side in the tire width direction and in the tire radial direction of the bead toe (2t) and a line linking the bead heel point (Ih) and the bead toe point (It) is inclined by an angle (α) of 12.2°-14.7° with respect to the tire width direction.

2. The run flat tire of claim 1, wherein in a cross section in the tire width direction thereof:
an outer contour line (23) of a bead base corresponding to the bead base surface (Pb), of an outer contour line of the bead portion (2), includes a linear bead toe-side portion (22) and a curved/linear bead heel-side portion (21) linked with the bead toe-side portion at a linking point (Ic);
a tangent of the bead heel-side portion differs from a tangent of the bead toe-side portion when the bead heel-side portion is linear; and
the bead toe-side portion is inclined by an angle of 17.5°-19.5° with respect to the tire width direction.

3. The run flat tire of claim 2, wherein in a cross section in the tire width direction thereof:
provided that a distance measured from the bead toe point (It) to the linking point (Ic) in the tire width direction is Lc and a distance measured from the bead toe point to the bead heel point (Ih) in the tire width direction is Lw, Lc ≥ 0.5 × Lw.

4. The run flat tire of any of claims 1 to 3, wherein in a cross section in the tire width direction thereof an angle formed at a bead toe point (It) by linear outer contour lines/imaginary linear extensions of curved outer contour lines of the bead portion (2) is ≥ 30°.

5. The run flat tire of any of claims 1 to 4, wherein in a cross section in the tire width direction thereof diameter (Dc) of an annular inner end in the tire radial direction of a bead core (5) embedded in each bead portion (2) is larger by 3.0-4.5 mm than the rim diameter (Dr) of the prescribed rim.

6. The run flat tire of any of claims 1 to 5, wherein a textile chafer is provided at least between a bead core (5) embedded in each bead portion (2) and the bead base surface (Pb) of the bead portion.

## Patentansprüche

1. Notlaufreifen (1), aufweisend einen Laufflächenabschnitt (3), ein Paar Seitenwandabschnitte (4), welche mit entsprechenden Seiten des Laufflächenabschnitts kontinuierlich sind, Wulstabschnitte (2), welche mit den entsprechenden Seitenwandabschnitten kontinuierlich sind, und ein Seitenverstärkungsgummi (10), welches einen sichelförmigen Querschnitt aufweist und in jedem Seitenwandabschnitt ausgebildet ist, wobei in einem Querschnitt in der Reifenbreitenrichtung desselben:
vorausgesetzt, dass der Schnittpunkt einer geraden Linie, welche zu einer äußeren Konturlinie (23) einer Wulstferse (2h) eines Wulstabschnitts (2) an einem Ende (Ic) auf der Wulstbasisflächenseite der äußeren Konturlinie tangential ist, mit einer geraden Linie, welche zur äußeren Konturlinie der Wulstferse an einem Ende auf der Wulstrückflächenseite der äußeren Konturlinie tangential ist, einen "Wulstfersenpunkt" (Ih) darstellt, im Falle, dass die äußere Konturlinie der Wulstferse des Wulstabschnitts aus einer krummen Linie besteht, und vorausgesetzt, dass der Schnittpunkt einer äußeren Konturlinie (23), auf der Wulstbasisflächenseite, der Wulstferse (2h) mit einer äußeren Konturlinie, auf der Wulstrückflächenseite, der Wulstferse einen "Wulstfersenpunkt" (Ih) darstellt, im Falle, dass die äußere Konturlinie der Wulstferse des Wulstabschnitts aus geraden Linien besteht (der Wulstfersenpunkt entspricht in diesem Falle dem Scharfeckpunkt der Wulstferse), der Durchmesser (Dh) eines Kreises, welcher kollektiv vom Wulstfersenpunkt gebildet ist, um 1,7-2,9 mm kleiner als der Felgendurchmesser (Dr) der vorgeschriebenen Felge ist; und
vorausgesetzt, dass der Schnittpunkt einer gedachten linearen Verlängerung einer Wulstbasisfläche von einem Ende auf der Wulstbasisflächenseite einer äußeren Konturlinie (24) einer Wulstzehe (2t) des Wulstabschnitts (2) mit einer gedachten linearen Verlängerung einer Wulstinnenfläche, von einem Ende auf der Wulstinnenflächenseite der äußeren Konturlinie der Wulstzehe einen "Wulstzehpunkt" (It) darstellt, im Falle, dass die äußere Konturlinie der Wulstzehe des Wulstabschnitts aus einer gekrümmten Linie besteht, und vorausgesetzt, dass der Schnittpunkt einer äußeren Konturlinie (24), auf der Wulstbasisflächenseite, der Wulstzehe (2t) mit einer äußeren Konturlinie, auf der Wulstinnenflächenseite, der Wulstzehe, einen "Wulstzehpunkt" (It) darstellt, im Falle, dass die äußere Konturlinie der Wulstzehe des Wulstabschnitts aus geraden Linien besteht (der Wulstzehpunkt entspricht in diesem Falle dem Scharfeckpunkt der Wulstzehe), die Wulstzehe (2h) des Wulstabschnitts (2) auf der Außenseite in der Reifenbreitenrichtung und in der radialen Richtung der Wulstzehe (2t) angeordnet ist, und eine Linie, welche den Wulstfersenpunkt (Ih) mit dem Wulstzehpunkt (It) verbindet, um einen Winkel (α) von 12,2° - 14,7° relativ zur Reifenbreitenrichtung geneigt ist.

2. Notlaufreifen nach Anspruch 1, wobei in einem Querschnitt in der Reifenbreitenrichtung desselben:
eine äußere Konturlinie (23) einer Wulstbasis, welche der Wulstbasisfläche (Pb) entspricht, einer äußeren Konturlinie des Wulstabschnitts (2), einen linearen Wulst-Zehseitenabschnitt (22) und einen gekrümmten/linearen Wulst-Fersenseitenabschnitt (21) einschließt, welcher mit dem Wulst-Zehseitenabschnitt in einem Verknüpfungspunkt (Ic) verknüpft ist;
eine Tangente zum Wulst-Fersenseitenabschnitt sich von einer Tangente zum Wulst-Zehseitenabschnitt unterscheidet, wenn der Wulst-Fersenseitenabschnitt linear ist; und
der Wulst-Zehseitenabschnitt um einen Winkel von 17,5° - 19,5° relativ zur Reifenbreitenrichtung geneigt ist.

3. Notlaufreifen nach Anspruch 2, wobei in einem Querschnitt in der Reifenbreitenrichtung desselben:
vorausgesetzt, dass der vom Wulstzehpunkt (It) zum Verknüpfungspunkt (Ic) gemessene Abstand in der Reifenbreitenrichtung Lc ist und der vom Wulstzehpunkt zum Wulstfersenpunkt (Ih) gemessene Abstand in der Reifenbreitenrichtung Lw ist, Lc ≥ 0,5 x Lw ist.

4. Notlaufreifen nach einem der Ansprüche 1 bis 3, wobei in einem Querschnitt in der Reifenbreitenrichtung desselben, der Winkel, welcher in einem Wulstzehpunkt (It) von linearen äußeren Konturlinien/gedachten linearen Verlängerungen der äußeren Konturlinien des Wulstabschnitts (2) gebildet ist, ≥ 30° ist.

5. Notlaufreifen nach einem der Ansprüche 1 bis 4, wobei in einem Querschnitt in der Reifenbreitenrichtung desselben, der Durchmesser (Dc) eines ringförmigen inneren Endes in der Reifenradialrichtung eines Wulstkerns (5), welcher in jedem Wulstabschnitt (2) eingeschlossen ist, um 3,0-4,5 mm größer als der Felgendurchmesser (Dr) der vorgeschriebenen Felge ist.

6. Notlaufreifen nach einem der Ansprüche 1 bis 5, wobei ein textiles Wulstband zumindest zwischen einem Wulstkern (5), welcher in jedem Wulstabschnitt (2) eingeschlossen ist, und der Wulstbasisfläche (Pb) des Wulstabschnitts vorgesehen ist.

## Revendications

1. Bandage pneumatique à roulage à plat (1), comportant une partie de bande de roulement (3), une paire de parties de flanc (4) continues par rapport aux côtés respectifs de la partie de bande de roulement, des parties de talon (2) continues par rapport aux parties de flanc respectives, et une gomme de renforcement latérale (10) ayant une section transversale en forme de croissant et agencée dans chaque partie de flanc, dans lequel, dans une section transversale, dans la direction de la largeur du bandage pneumatique :
lorsqu'une intersection d'une ligne droite tangentielle par rapport à une ligne de contour externe (23) d'un bout de talon (2h) d'une partie de talon (2), au niveau d'une extrémité (Ic) sur le côté de la surface de base du talon, de la ligne de contour externe, et d'une ligne droite tangentielle à la ligne de contour externe du bout de talon, au niveau d'une extrémité sur le côté de la surface arrière du talon de la ligne de contour externe, représente un « point de bout de talon » (Ih), dans un cas où la ligne de contour externe du bout de talon de la partie de talon est constituée par une ligne courbée, et lorsqu'une intersection d'une ligne de contour externe 523), sur le côté de la surface de base du talon, du bout de talon (2h) et d'une ligne de contour externe, sur le côté de la surface arrière du talon, du bout de talon, représente un « point de bout de talon (Ih), dans un cas où la ligne de contour externe du bout de talon de la partie de talon est constituée par une des lignes droites (le point de bout de talon coïncide avec le point du coin aigu du bout de talon dans ce cas), le diamètre (Dh) d'un cercle formé collectivement par le point de bout de talon, est inférieur de 1,7 à 2,9 mm au diamètre de jante (Dr) de la jante prescrite ; et
lorsqu'une intersection d'une extension linéaire imaginaire d'une surface de base du talon, à partir d'une extrémité sur le côté de la surface de base de talon, d'une ligne de contour externe (24) d'une pointe de talon (2t) de la partie de talon (2) et d'une extension linéaire imaginaire d'une surface interne du talon, à partir d'une extrémité sur le côté de la surface interne du talon, de la ligne de contour externe de la pointe de talon, représente un « point de la pointe du talon (It), dans un cas où la ligne de contour externe de la pointe de talon de la partie de talon est constituée par une ligne courbée, et lorsqu'une intersection d'une ligne de contour externe (24), sur le côté de la surface de base du talon, de la pointe de talon (2t) et d'une ligne de contour externe, sur le côté de la surface interne du talon, de la pointe de talon représente un « point de la pointe du talon » (It), dans un cas où la ligne de contour externe de la pointe du talon de la partie de talon est constituée par des lignes droites (la pointe du talon coïncide avec le point du coin aigu de la pointe du talon dans ce cas), le bout de talon (2h) de la partie de talon (2) est positionné sur le côté externe, dans la direction de la largeur du bandage pneumatique et dans la direction radiale du bandage pneumatique, de la pointe du talon (2t), une ligne reliant le point de bout de talon (Ih) et le point de la pointe du talon (It) étant inclinée à un angle (α) compris entre 12,2° et 14,7° par rapport à la direction de la largeur du bandage pneumatique.

2. Bandage pneumatique à roulage à plat selon la revendication 1, dans lequel, dans une section transversale dans la direction de la largeur du bandage pneumatique :
une ligne de contour externe (23) d'une base de talon, correspondant à la surface de base du talon (Pb), d'une ligne de contour externe de la partie de talon (2), inclut une partie du côté du bout du talon linéaire (22) et une partie du côté du bout du talon courbée/linéaire (21) reliée à la partie du côté de la pointe du talon au niveau d'un point de liaison (Ic) ;
une tangente de la partie du côté du bout du talon diffère d'une tangente de la partie du côté de la pointe du talon lorsque la partie du côté du bout du talon est linéaire ; et
la partie du côté de la pointe du talon est inclinée à un angle compris entre 17,5 ° et 19,5° par rapport à la direction de la largeur du bandage pneumatique.

3. Bandage pneumatique à roulage à plat selon la revendication 2, dans lequel, dans une section transversale dans la direction de la largeur du bandage pneumatique :
lorsqu'une distance mesurée entre le point de la pointe du talon (It) et le point de liaison (Ic), dans la direction de la largeur du bandage pneumatique, correspond à Lc, une distance mesurée entre le point de la pointe du talon et le point du bout du talon (Ih), dans la direction de la largeur du bandage pneumatique, correspond à Lw, Lc ≥ 0,5 x Lw.

4. Bandage pneumatique à roulage à plat selon l'une quelconque des revendications 1 à 3, dans lequel, dans une section transversale, dans la direction de la largeur du bandage pneumatique, un angle formé au niveau du point de la pointe du talon (It) par des lignes de contour externes linéaires/des extensions linéaires imaginaires de lignes de contour externes courbées de la partie de talon (2), est ≥ 30°.

5. Bandage pneumatique à roulage à plat selon l'une quelconque des revendications 1 à 4, dans lequel, dans une section transversale, dans la direction de la largeur du bandage pneumatique, le diamètre (Dc) d'une extrémité annulaire interne, dans la direction radiale du bandage pneumatique, d'une tringle (5) noyée dans chaque partie de talon (2), est supérieur de 3,0 à 4,5 mm au diamètre de jante (Dr) de la jante prescrite.

6. Bandage pneumatique à roulage à plat selon l'une quelconque des revendications 1 à 5, dans lequel une bandelette talon est agencée au moins entre une tringle (5) noyée dans chaque partie de talon (2) et une surface de base du talon (Pb) de la partie de talon.
